# FASCICULE DE BREVET EUROPEEN

(11) **EP 3 122 579 B1**
(45) Date de publication et mention de la délivrance du brevet: **08.07.2020**
(21) Numéro de dépôt: 15710147.8
(22) Date de dépôt: 05.03.2015
(51) Int. Cl.: B60H 1/00

(54) **BOÎTIER D'ADMISSION D'AIR POUR INSTALLATION DE VENTILATION DE VÉHICULE AUTOMOBILE**
LUFTEINLASSGEHÄUSE FÜR EINE BELÜFTUNGSANLAGE EINES KRAFTFAHRZEUGS
AIR ADMISSION HOUSING FOR VENTILATION FACILITY OF A MOTOR VEHICLE

(30) Priorité: 28.03.2014 FR 1452695
(43) Date de publication de la demande: 01.02.2017
(73) Titulaire: Valeo Systèmes Thermiques, 78320 Le Mesnil-Saint-Denis (FR)
(72) Inventeur: PIERRES, Philippe, F-78990 Elancourt (FR); LISKA, Jan, 25228 Cernosice (CZ); ALMORI, Armelle, F-78310 Maurepas (FR)
(86) Numéro de dépôt international: PCT/EP2015/054672
(87) Numéro de publication internationale: WO 2015/144418

(56) Documents cités:
- EP-A1- 2 402 183
- WO-A2-2010/111482
- JP-A- 2006 321 272
- US-A1- 2010 009 620

## Description

L'invention concerne un boîtier d'admission d'air pour installation de ventilation de véhicule automobile.

Il est usuel dans les véhicules automobiles de disposer une installation de ventilation. Il est usuel que cette installation assure la ventilation du véhicule soit à partir d'air extérieur, soit à partir d'air de l'habitacle aussi appelé air de recirculation.

Dans ce cas, l'installation comporte un boîtier d'admission d'air présentant deux entrées d'air, l'une pour l'air extérieur, l'autre pour l'air de recirculation. L'entrée d'air extérieur est en général orientée vers l'avant du véhicule automobile. Pour des questions d'optimisation acoustique, l'entrée d'air de recirculation est orientée transversalement au véhicule, c'est-à-dire perpendiculairement à l'entrée d'air extérieur. Selon cette disposition, la différence de niveau acoustique entre les modes de ventilation par air extérieur d'une part, et par air de recirculation d'autre part, est relativement faible.

Chacune des entrées d'air est équipée d'une grille de protection contre des agents extérieurs, par exemple des feuilles. Du fait de la présence de ces deux grilles, le boîtier d'admission d'air, réalisé par moulage, est constitué en deux parties, qui sont assemblées au niveau d'un plan sensiblement équatorial.

Ce mode de réalisation du boîtier d'admission d'air présente plusieurs inconvénients parmi lesquels : la nécessité d'installer 2 grilles, une pour chaque entrée d'air ; la nécessité, pour l'étape de moulage, de disposer sur chacune des deux parties du boîtier des pièces destinées à assurer l'assemblage des deux parties ; et la nécessité d'une étape d'assemblage mécanique des deux parties du boîtier ; chacune de ces étapes ayant un caractère onéreux.

Le document JP 2006 321272 A divulgue un boîtier d'admission connu présentant une seule grille pour les deux entrées d'air, ladite grille étant située à l'intérieur du boîtier.

Un but de l'invention est de proposer un boîtier d'admission d'air présentant une disposition simplifiée de grille.

Pour ce faire, l'invention a pour objet un boîtier d'admission d'air d'une installation de ventilation de véhicule automobile, suivant les caractéristiques de la revendication 1.

Avec cette conception du boîtier d'admission d'air, les grilles habituellement placées aux deux entrées d'air, se trouvent remplacées par au moins une grille traversant la canalisation et séparant un espace d'entrée d'air et un espace de sortie d'air, dans le boîtier d'admission d'air. Il en résulte une simplification de la construction du boîtier.

Avantageusement, la grille est disposée en oblique dans la canalisation.

Avantageusement, l'entrée d'air extérieur est orientée vers l'avant du véhicule.

De manière avantageuse, l'entrée d'air de recirculation et orientée transversalement au véhicule.

Avantageusement, la grille est unique.

De manière avantageuse, le boitier comporte un volet de répartition de l'arrivée d'air, entre l'entrée d'air extérieur et l'entrée d'air de recirculation.

Avantageusement, le boîtier comporte une fenêtre apte à recevoir un module de commande pulseur.

De préférence, le boîtier est réalisé en une seule pièce.

Selon un mode de réalisation, le boîtier est réalisé en deux pièces.

Suivant l'invention, l'entrée d'air de recirculation et la sortie sont situées en vis-à-vis dans la canalisation apte à recevoir l'air des entrées d'air et à le transmettre à l'installation de ventilation du véhicule automobile.

L'invention a encore pour objet une installation de ventilation de véhicule automobile caractérisée en ce qu'elle comporte un boîtier d'admission d'air tel que décrit ci-dessus.

D'autres caractéristiques et avantages de l'invention ressortent de la description qui suit faite en référence aux dessins annexés dans lesquels :

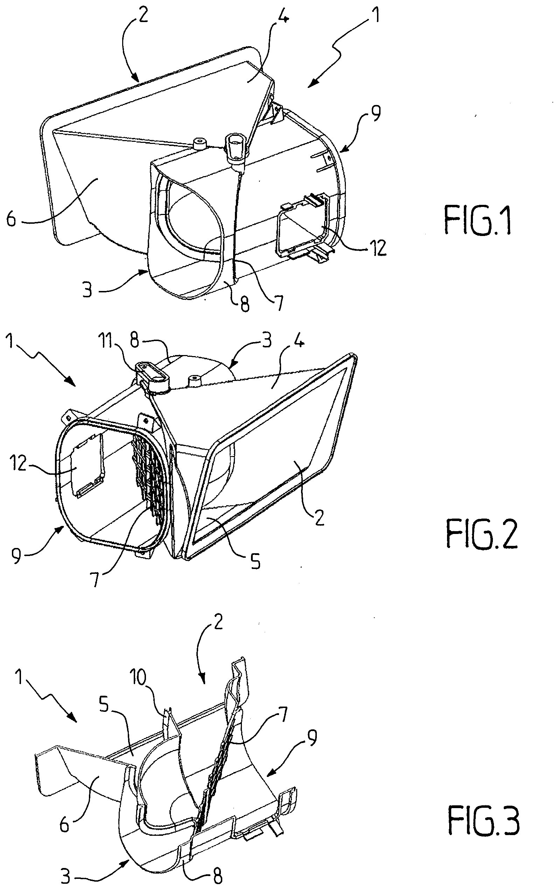

- la figure 1 représente une vue en perspective de l'arrière d'un boîtier d'admission d'air pour installation de ventilation de véhicule automobile selon un mode de réalisation de l'invention,
- la figure 2 représente une vue en perspective de l'avant du boîtier d'admission d'air de la figure 1 ;
- la figure 3 représente une vue en coupe, du boîtier d'admission d'air de la figure 1.

Le boîtier d'admission d'air selon l'invention comporte une entrée d'air extérieur 2 et une entrée 3 d'air de l'habitacle, aussi appelé air de recirculation. Selon un mode de réalisation particulier, l'entrée 2 d'air extérieur est dirigée vers l'avant du véhicule automobile et l'entrée 3 d'air de recirculation est dirigée transversalement au véhicule automobile, c'est-à-dire perpendiculairement à l'entrée 2 d'air extérieur. Une telle configuration permet de réduire les différences de niveau acoustique entre les modes de ventilation. Toutefois, d'autres dispositions peuvent également être mises en œuvre.

L'entrée 2 d'air extérieur est sensiblement plane et rectangulaire, et elle est dépourvue de grille. D'autres formes d'entrée d'air peuvent être réalisées, notamment, rondes ou ovales.

Cette entrée d'air 2 est à l'entrée d'un volume, par exemple prismatique, défini par une paroi supérieure 4, une paroi inférieure 5, une paroi latérale gauche 6 oblique, et une paroi latérale droite oblique, constituée par une grille 7. Ce volume peut également prendre d'autres formes, par exemple, tubulaire.

L'entrée d'air de recirculation 3 est par exemple de forme sensiblement rectangulaire avec des angles arrondis, et elle est dépourvue de grille.

Cette entrée 3 est à l'entrée d'une canalisation 8. Selon l'exemple donné, cette canalisation 8 est sensiblement cylindrique, d'axe sensiblement parallèle au plan de l'entrée d'air extérieur 2. D'autres formes peuvent également être mises en œuvre, par exemple sensiblement rectangulaire. La canalisation 8 se raccorde au volume de l'entrée d'air extérieur 2, et présente une sortie 9 opposée à l'entrée 3 et reliée à l'installation de ventilation du véhicule automobile. En d'autres termes, l'axe de l'entrée d'air de recirculation 3 et l'axe de la sortie 9 forment un angle de 180°. Ainsi, la canalisation 8 reçoit l'air de chacune des deux entrées 2, 3 et le transmet à l'installation de ventilation du véhicule automobile. Etant donné que l'axe de l'entrée d'air de recirculation 3 et l'axe de la sortie 9 forment un angle de 180°, cela permet au flux d'air de recirculation d'adopter une trajectoire rectiligne. Ceci est particulièrement avantageux dans le cadre d'un dispositif de chauffage, ventilation et/ou climatisation (communément appelé HVAC) avec une architecture dite centrée, où le boitier d'entrée d'air (avec un pulseur) et le boitier principal (partie du boîtier où sont compris les échangeurs de chaleur) du dispositif de chauffage, ventilation et/ou climatisation sont agencés dans un même plan. En effet, une telle disposition des entrées et sortie d'air permet de réduire considérablement les nuisances sonores générées par les flux d'air. La grille 7 est particulièrement adaptée pour une telle architecture puisque, l'axe de l'entrée d'air de recirculation 3 et l'axe de la sortie 9 formant un angle plat, la canalisation 8 est donc rectiligne résultant ainsi en une simplification des opérations de moulage et de démoulage.

Avantageusement, la canalisation 8 est disposée transversalement au véhicule.

Selon l'invention, la grille 7, qui constitue la paroi latérale droite du volume dont l'entrée d'air extérieur 2 constitue la limite extérieure, se prolonge dans la canalisation 8 qu'elle traverse complètement. De préférence, cette paroi est sensiblement oblique. Selon un autre exemple de réalisation, cette paroi est perpendiculaire à la canalisation 8.

La grille 7 sépare ainsi d'une part l'ensemble de l'entrée d'air extérieur 2 et de l'entrée d'air de recirculation 3, et d'autre part, la sortie 9 de la canalisation 8. La grille 7 assure la protection de l'installation de ventilation du véhicule contre les agents extérieurs tels que les feuilles.

La disposition d'une grille 7 unique, en oblique dans la canalisation 8, permet la réalisation du boîtier d'admission d'air par moulage en une seule pièce. En effet, les formes intérieures utilisées pour le moulage du boîtier sont extraites par les entrées 2, 3 et la sortie 9 au démoulage. Il en résulte une simplification des opérations de moulage et de démoulage, une simplification de la structure du boîtier d'admission d'air, et les économies correspondantes.

Selon un autre mode de réalisation, la grille peut être constituée de plusieurs éléments adjacents qui, ensemble, assurent la protection, contre le agents extérieurs, de la canalisation 8.

Selon un mode de réalisation particulier, le boîtier est réalisé en deux pièces, par exemple séparées par un plan sensiblement équatorial. Dans ce cas, la grille est elle aussi constituée en deux parties, rattachées chacune à l'une des pièces du boîtier.

Le boîtier d'admission d'air 1 comprend encore un volet 10 de répartition de l'arrivée d'air entre l'entrée d'air extérieur 2 et l'entrée d'air de recirculation 3. Le volet 10 est apte à être déplacé entre une première position extrême dans laquelle il libère l'entrée d'air extérieur 2 et obture l'entrée d'air de recirculation 3, et une deuxième position extrême dans laquelle il obture l'entrée d'air extérieur 2 et libère l'entrée d'air de recirculation 3. Entre ces deux positions extrêmes, le volet 10 est apte à occuper toute position intermédiaire, assurant le contrôle des débits et du mélange entre l'air extérieur et l'air de recirculation.

Ce volet 10 est commandé par l'intermédiaire d'un actionneur mécanique (par came) ou électronique (moteur pas à pas) 11. L'actionneur 11 et le volet 10 pivotent autour d'un axe vertical non représenté. Le volet 10, moulé séparément, est introduit dans le boîtier 1, à travers l'entrée d'air extérieur 2, en utilisant sa déformabilité élastique.

Une fois le volet 10 placé, l'axe vertical et l'actionneur 11 sont mis en place et le boîtier d'admission d'air 1 est opérationnel.

Enfin, la canalisation 8 peut présenter une fenêtre 12 pour la disposition d'un module de commande pulseur participant au contrôle de la ventilation du véhicule automobile. Le module de commande pulseur peut contrôler par exemple la température de l'air circulant dans la canalisation 8 et, commander l'actionneur 11 pour assurer le respect des consignes de température imposées par le conducteur du véhicule.

## Revendications

1. Boîtier d'admission d'air d'une installation de ventilation de véhicule automobile, comprenant une entrée d'air extérieur (2), une entrée d'air de recirculation (3), et une canalisation (8) apte à recevoir l'air de l'entrée d'air extérieur (2) et de l'entrée d'air de recirculation (3) et à le transmettre par une sortie (9) à l'installation de ventilation du véhicule automobile, comportant au moins une grille (7), traversant la canalisation (8) en séparant d'une part l'ensemble de l'entrée d'air extérieur (2) et de l'entrée d'air de recirculation (3), et d'autre part la sortie (9) de la canalisation (8), ledit boîtier étant **caractérisé en ce que** la canalisation (8) est sensiblement cylindrique, l'axe de l'entrée d'air de recirculation (3) et l'axe de la sortie (9) formant un angle de 180° de manière à ce le flux d'air de recirculation adopte une trajectoire rectiligne, l'entrée d'air de recirculation (3) étant dirigée perpendiculairement à l'entrée d'air extérieur (2).

2. Boîtier selon la revendication 1, **caractérisé en ce que** la grille (7) est disposée en oblique dans la canalisation (8).

3. Boîtier selon l'une quelconque des revendications précédentes, **caractérisé en ce que** la grille (7) est unique.

4. Boîtier selon l'une quelconque des revendications précédentes, **caractérisé en ce qu'**il comporte un volet (10) de répartition de l'arrivée d'air, entre l'entrée d'air extérieur (2) et l'entrée d'air de recirculation (3).

5. Boîtier selon l'une quelconque des revendications précédentes, **caractérisé en ce qu'**il comporte une fenêtre (12) apte à recevoir un module de commande pulseur.

6. Boîtier selon l'une quelconque des revendications précédentes, **caractérisé en ce qu'**il est réalisé en une seule pièce.

7. Boîtier selon l'une quelconque des revendications 1 à 5, **caractérisé en ce qu'**il est réalisé en deux pièces.

8. Installation de ventilation comportant un boîtier d'admission d'air selon l'une quelconque des revendications précédentes.

## Patentansprüche

1. Lufteinlassgehäuse für eine Lüftungsanlage eines Kraftfahrzeugs, umfassend einen Außenlufteinlass (2), einen Rückführungslufteinlass (3) und einen Kanal (8), der die Luft von dem Außenlufteinlass (2) und dem Rückführungslufteinlass (2) empfangen und sie durch einen Ausgang (9) zu der Lüftungsanlage des Kraftfahrzeugs übertragen kann, umfassend mindestens ein Gitter (7), das den Kanal (8) durchquert, wobei es die Anordnung des Außenlufteinlasses (2) und des Rückführungslufteinlasses (3) von dem Ausgang (9) des Kanals (8) trennt, wobei das Gehäuse **dadurch gekennzeichnet ist, dass** der Kanal (8) im Wesentlichen zylindrisch ist, wobei die Achse des Rückführungslufteinlasses (3) und die Achse des Ausgangs (9) einen Winkel von 180° bilden, so dass der Rückführungsluftstrom eine geradlinige Bahn einnimmt, wobei der Rückführungslufteinlass (3) senkrecht zu dem Außenlufteinlass (2) ausgerichtet ist.

2. Gehäuse nach Anspruch 1, **dadurch gekennzeichnet, dass** das Gitter (7) schräg in dem Kanal (8) angeordnet ist.

3. Gehäuse nach einem der vorhergehenden Ansprüche, **dadurch gekennzeichnet, dass** nur ein Gitter (7) vorgesehen ist.

4. Gehäuse nach einem der vorhergehenden Ansprüche, **dadurch gekennzeichnet, dass** es eine Luftzufuhrverteilungsklappe (10) zwischen dem Außenlufteinlass (2) und dem Rückführungslufteinlass (3) umfasst.

5. Gehäuse nach einem der vorhergehenden Ansprüche, **dadurch gekennzeichnet, dass** es ein Fenster (12) umfasst, das ein Gebläsesteuermodul aufnehmen kann.

6. Gehäuse nach einem der vorhergehenden Ansprüche, **dadurch gekennzeichnet, dass** es einteilig ausgebildet ist.

7. Gehäuse nach einem der Ansprüche 1 bis 5, **dadurch gekennzeichnet, dass** es zweiteilig ausgebildet ist.

8. Lüftungsanlage, die ein Lufteinlassgehäuse nach einem der vorhergehenden Ansprüche umfasst.

## Claims

1. Air intake housing for a ventilation facility of a motor vehicle, comprising an outside air inlet (2), a recirculation air inlet (3) and a duct (8) able to receive the air from the outside air inlet (2) and from the recirculation air inlet (3) and to transmit it via an outlet (9) to the ventilation facility of the motor vehicle, comprising at least one grille (7) crossing the duct (8) and separating the assembly of the outside air inlet (2) and the recirculation air inlet (3) from the outlet (9) of the duct (8), said housing being **characterized in that** the duct (8) is substantially cylindrical, the axis of the recirculation air inlet (3) and the axis of the outlet (9) forming an angle of 180° such that the flow of the circulation air adopts a rectilinear trajectory, the recirculation air inlet (3) being directed perpendicularly to the outside air inlet (2) .

2. Housing according to Claim 1, **characterized in that** the grille (7) is arranged obliquely in the duct (8).

3. Housing according to either one of the preceding claims, **characterized in that** there is only one grille (7) .

4. Housing according to any one of the preceding claims, **characterized in that** it comprises an input air distribution flap (10) between the outside air inlet (2) and the recirculation air inlet (3).

5. Housing according to any one of the preceding claims, **characterized in that** it comprises a window (12) able to receive a pulse control module.

6. Housing according to any one of the preceding claims, **characterized in that** it is produced in one piece.

7. Housing according to any one of Claims 1 to 5, **characterized in that** it is produced in two pieces.

8. Ventilation facility comprising an air intake housing according to any one of the preceding claims.
